# EUROPÄISCHE PATENTSCHRIFT

(11) **EP 3 205 197 B1**
(45) Veröffentlichungstag und Bekanntmachung des Hinweises auf die Patenterteilung: **17.10.2018**
(21) Anmeldenummer: 17401010.8
(22) Anmeldetag: 09.02.2017
(51) Int. Cl.: A01C 15/00

(54) **DACHFÖRMIGE ABDECKPLANENANORDNUNG FÜR EINEN VORRATSBEHÄLTER EINER LANDWIRTSCHAFTLICHEN VERTEILMASCHINE**
ROOF-SHAPED TARPAULIN ARRANGEMENT FOR A STORAGE TANK OF AN AGRICULTURAL DISTRIBUTION MACHINE
SYSTEME DE BACHES POUR RECIPIENT DE STOCKAGE EN FORME DE TOIT POUR UNE MACHINE DE DISTRIBUTION AGRICOLE

(30) Priorität: 11.02.2016 DE 102016102375
(43) Veröffentlichungstag der Anmeldung: 16.08.2017
(73) Patentinhaber: Amazonen-Werke H. Dreyer GmbH & Co. KG, 49205 Hasbergen (DE)
(72) Erfinder: Kleine-Hartlage, Hubertus, 49186 Bad Iburg (DE); Walter, Achim, 49078 Osnabrück (DE); Nienstermann, Heinke, 49078 Osnabrück (DE); Hofter, Rainer, 49143 Bissendorf (DE)

(56) Entgegenhaltungen:
- EP-A1- 1 149 524
- EP-A1- 2 688 388
- DE-A1- 19 818 064
- DE-A1-102015 105 364

## Beschreibung

Die Erfindung betrifft eine dachförmige Abdeckplanenanordnung gemäß des Oberbegriffes des Patentanspruches 1.

Dachförmige Abdeckplanenordnungen sind beispielsweise in DE 198 18 064 A1, EP 2 688 388 A1, EP 1 149 524 A1 oder der nachveröffentlichten DE 10 2015 105364 A1 beschrieben. Die Abdeckplane ist auf ihrer einen Seite am Vorratsbehälter befestigt und auf ihrer gegenüberliegenden Seite an einer ersten Stange. Diese Stange ist an einem Schwenkbügel befestigt, der in der Mitte des Vorratsbehälters, an dessen oberen Wandbereich mittels Gelenken angebracht und um eine sich in der Behältermitte befindliche Gelenkachse der Gelenke schwenkbar ist. Zusätzlich ist als Stützbügel eine zweite Stange vorgesehen, wodurch ein Dach gebildet wird. Der Stützbügel ist schwenkbar am Vorratsbehälter befestigt. Somit hat diese Ausgestaltung den Vorteil, dass die Abdeckplane zur zumindest teilweisen Öffnung der Einfüllöffnung des Behälters wegschwenkbar ist. Durch die Ausbildung als Satteldach ergeben sich schräg verlaufende Dachflächen, so dass beispielsweise Regenwasser nach unten abfließen kann. In ihrer den Behälter abdeckenden Position aber überdeckt die blickdichte Abdeckplane die Behälteröffnung vollständig. Das Dach ist somit ein zusätzlicher Aufbau auf einem ohnehin voluminösen landwirtschaftlichen Arbeitsgerät.

Der Erfindung liegt daher die Aufgabe zugrunde, eine Abdeckplanenanordnung zu schaffen, die in ihrer die Behälteröffnung abdeckenden Position das Sichtfeld des Fahrzeugführers nicht über das notwendige Mindestmaß hinaus einschränkt.

Diese Aufgabe wird erfindungsgemäß durch die kennzeichnenden Merkmale des Anspruchs 1 gelöst.

Somit wird die Voraussetzung dafür geschaffen, dass der Fahrzeugführer von seiner erhöhten, zentralen Sitzposition in der Kabine der Zugmaschine einen größeren Bereich hinter und schräg hinter der Arbeitsmaschine einsehen kann. Vor allem beim Rangieren und im Straßenverkehr ist es vorteilhaft, wenn der Fahrzeugführer einer Zugmaschine mit gezogener oder angebauter, insbesondere großvolumiger landwirtschaftlicher Maschine einen möglichst großen Bereich seines Umfelds einsehen kann. Dadurch wird die Sicherheit beträchtlich erhöht. Eine Abdeckplanenanordnung, bei der die zweite Stange kürzer ausgeführt ist, als die erste Stange und als die Behälterkante, an der die Abdeckplane befestigt ist, weist daher trapezförmige Dachflächen auf, die von der ersten Stange bzw. der Behälterkante, an der die Abdeckplane befestigt ist, ausgehend zu der höher gelegenen zweiten Stange schmaler werdend verlaufen.

Durch die verkürzt ausgeführte zweite Stange sind auch die Giebelseiten des Dachs oberhalb der Behälterstirnseiten, die von dreieckförmigen Stirnflächen der Abdeckplane verschlossen werden und von den stirnseitigen Behälterkanten zu den Enden der kürzeren zweiten Stange verlaufen, schräg angestellt. Von der erhöhten, zentralen Sitzposition des Fahrzeugführers aus gesehen, gibt diese erfindungsgemäße Abdeckplanenanordnung mit trapezförmigen Dachflächen und schräg angestellten dreieckförmigen Stirnflächen somit einen größeren Sichtbereich frei, als dies für eine herkömmliche, nicht erfindungsgemäße dachförmige Abdeckplanenanordnung möglich ist.

Dieser Effekt wird bei Dächern erzielt, sobald die zweite, höher gelegene Stange erfindungsgemäß verkürzt ausgeführt ist. Bei dem asymmetrisch ausgeführten Dach befindet sich die kürzere, zweite Stange näher an der Behälterkante, an der die Abdeckplane befestigt ist, als an der gegenüberliegenden Behälterkante bzw. der ersten Stange. Dieses ist im Regelfall auf der Ankuppelseite der Maschine.

In der beschriebenen Ausgestaltung deckt die Abdeckplane die Einfüllöffnung des Vorratsbehälters in wenigstens annähernd gestraffter Weise die vollständig ab und weist die Vorzüge für das Ablaufen von beispielsweise Regenwasser einer Satteldachkonstruktion auf. Gleichzeitig wird dem Fahrzeugführer nur ein kleinerer Teil seines insbesondere rückwärtigen Blickfeldes eingeschränkt, als es bei einem herkömmlich ausgestalteten Satteldach der Fall wäre.

Weitere Einzelheiten der Erfindung sind der Beispielsbeschreibung und den Zeichnungen zu entnehmen. Die Zeichnungen zeigen
Fig.1 eine an eine Zugmaschine angebaute landwirtschaftliche Verteilmaschine mit einer dachförmigen Abdeckplane mit schräg angestellten Stirnflächen in perspektivischer Ansicht schräg von vorne oben,
Fig.2 den oberen Teil einen Vorratsbehälters einer landwirtschaftlichen Verteilmaschine in perspektivischer Darstellung von schräg hinten,
Fig.3 eine aus Fig. 2 vergrößert dargestellte, schräg angestellte dreieckförmige Stirnfläche in perspektivischer Darstellung von schräg hinten,
Fig.4 den oberen Teil eines Vorratsbehälters einer landwirtschaftlichen Verteilmaschine in Heckansicht
Fig.5 einen aus Fig. 4 vergrößert dargestellten Seitenbereich des Dachs des Vorratsbehälters in Heckansicht und
Fig.6 den oberen Teil eines Vorratsbehälters einer landwirtschaftlichen Verteilmaschine in seitlicher Ansicht.

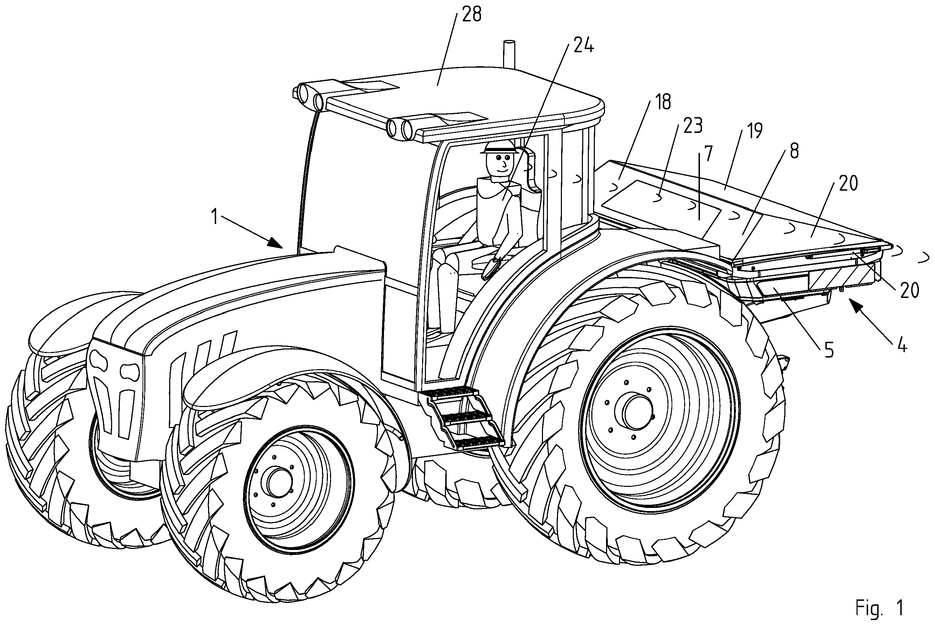

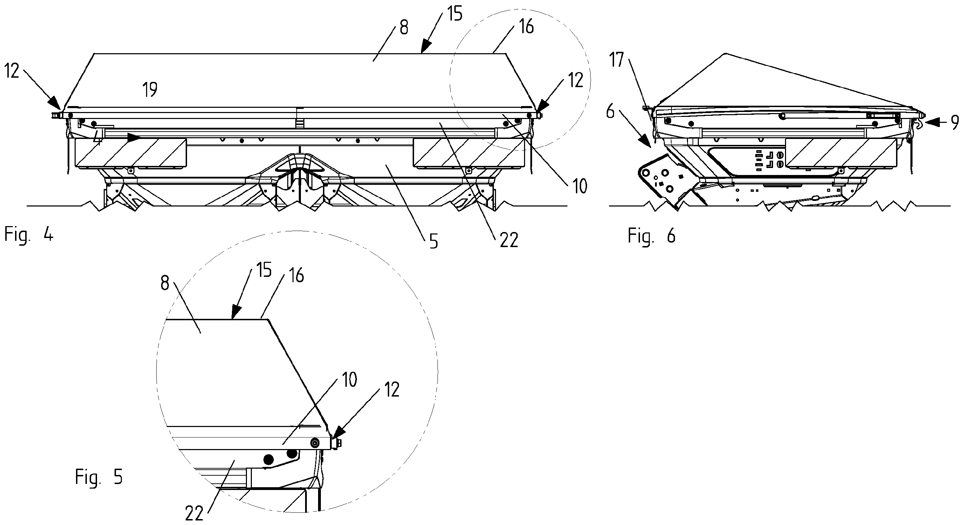

An einen Dreipunktkraftheber einer landwirtschaftlichen Zugmaschine 1, beispielsweise eines Ackerschleppers, wird über nur teilweise dargestellte Dreipunktkupplungselemente 2 der teilweise dargestellte Rahmen 3 einer landwirtschaftlichen Verteilmaschine 4 an die Zugmaschine 1 angekuppelt. Die landwirtschaftliche Verteilmaschine ist im gewählten Ausführungsbeispiel in Fig. 1 bis Fig. 5 als Zentrifugaldüngerstreuer ausgebildet. Dieser Zentrifugaldüngerstreuer weist einen Vorratsbehälter 5 auf, der auf dem teilweise dargestellten Rahmen 3 angeordnet ist. Auf der der Zugmaschine 1 zugewandten Seite, Ankuppelseite 6, sind nur teilweise dargestellte Dreipunktkupplungselemente 2 zum Ankuppeln des Rahmens 3 an eine Kupplungsvorrichtung einer landwirtschaftlichen Zugmaschine 1, beispielsweise eines Ackerschleppers, angeordnet. Der Vorratsbehälter 5 weist eine abgedeckt dargestellte Einfüllöffnung 7 auf, die sich im dargestellten Ausführungsbeispiel zumindest annähernd über den gesamten oberen Querschnitt des Vorratsbehälters 5 erstreckt.

Die Einfüllöffnung 7 des Vorratsbehälters 5 ist mittels einer Abdeckplane 8 abgedeckt. Die Abdeckplane 8 ist auf der Ankuppelseite 6 mittels geeigneter Befestigungsmittel, beispielsweise Schraubverbindung, im Bereich der Einfüllöffnung 7 am Vorratsbehälter 5 befestigt. Das gegenüberliegende Ende 9 der Abdeckplane 8 ist schlaufenartig ausgebildet. Durch diesen schlaufenartigen Bereich 10 wird eine erste Stange 11 gesteckt. Die äußeren Enden 12 dieser ersten Stange 11 sind jeweils mit Schwenkstangen 13 verbunden. Die erste Stange 11 bildet gemeinsam mit den Schwenkstangen 13 einen Schwenkbügel 14. Im ankuppelseitigen Bereich weist die Abdeckplane 8 einen weiteren schlaufenartigen Bereich 15 auf, durch den eine zweite Stange 16 geführt ist. Diese zweite Stange 16 verläuft parallel zu der ersten Stange 11 und der Behälterkante 17, an der die Abdeckplane 8 befestigt ist, und ist im dargestellten Beispiel kürzer als die erste Stange 11 und als die Behälterkante 17 ausgebildet. Die zweite Stange 16 ist an weiteren, nicht dargestellten Schwenkstangen befestigt, mit welchen sie einen zweiten Schwenkbügel bildet.

Der Schwenkbügel 14 und der zweite, nicht dargestellte Schwenkbügel sind schwenkbar am oberen Bereich des Vorratsbehälters 1 befestigt und weisen Schwenkachsen auf, die parallel zu den Stangen 11 und 16 verlaufen.

Durch die gegenüber der ersten Stange 11 kürzer ausgebildete zweite Stange 16 sind die von den Behälterkante 17 bzw. der ersten Stange 11 verlaufenden Dachflächen 18 und 19 trapezförmig ausgebildet. Die dreieckförmigen Stirnflächen 20 der Abdeckplane 8, die von den Stirnseiten 21 des Vorratsbehälters 5 zu den äußeren Enden der kürzeren, zweiten Stange 16 verlaufen, sind schräg angestellt.

Im dargestellten Beispiel ist die zweite Stange 16 näher an der Behälterkante 17 angeordnet, an der die Abdeckplane 8 befestigt ist, als an der gegenüberliegenden Behälterkante 22 bzw. der ersten Stange 11. Dadurch ist die dachförmige Abdeckplanenanordnung asymmetrisch und die dreieckförmigen Stirnflächen 20 sind nicht als gleichschenklige Dreiecke ausgebildet. Der Anstellwinkel gegenüber der Waagerechten der ankuppelseitigen Dachfläche 18 ist größer als der der rückwärtigen Dachfläche 19 und beträgt im dargestellten Beispiel 38°. Die Waagerechte wird im dargestellten Beispiel durch die Ebene festgelegt, die die Behälterkanten 17 und 22 sowie die stirnseitigen Kanten 21 aufspannen.

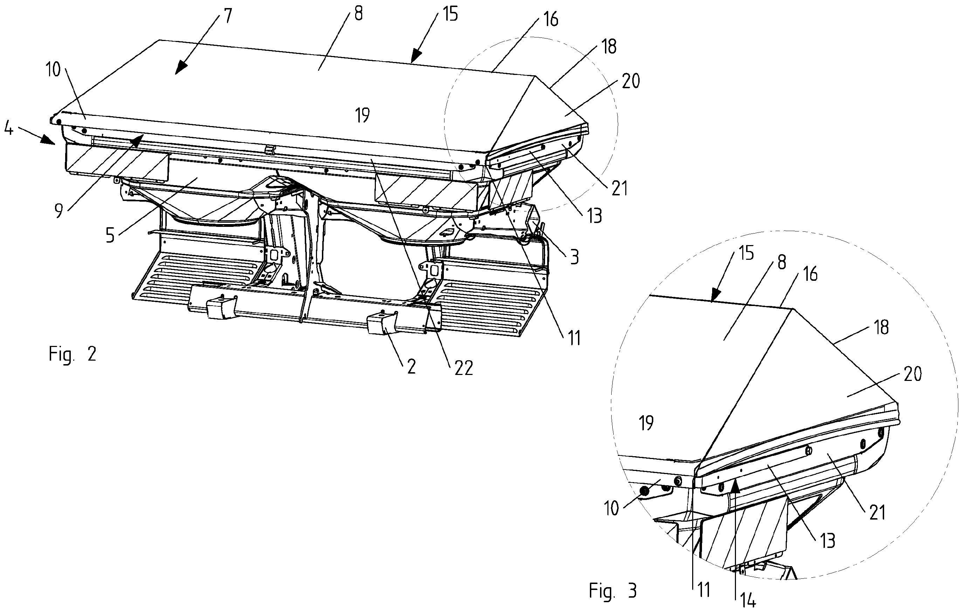

Die derart gestaltete Abdeckplanenanordnung verschließt den Vorratsbehälter 5 vollständig, wie es in Fig. 1 und Fig. 2 gezeigt ist. Die erfindungsgemäße satteldachförmige Abdeckplanenanordnung begünstigt durch schräge Dachflächen den Abfluss von beispielsweise Regenwasser. Gleichzeitig beschränkt das erfindungsgemäße Satteldach durch seine schräg angestellten Stirnflächen 20 die Sicht 23 des Fahrzeugführers 24 nach hinten und schräg hinten weniger, als es bei herkömmlichen Dachvarianten der Fall wäre.

## Patentansprüche

1. Dachförmige Abdeckplanenanordnung mit einem Vorratsbehälter (5) einer landwirtschaftlichen Verteilmaschine (4), dessen obere Behälteröffnung, insbesondere Einfüllöffnung (7), mit einer Abdeckplane (8) abdeckbar ist, wobei die Abdeckplane (8) an ihrer einen Längsseite mittels geeigneter Befestigungsmittel am Vorratsbehälter (5) und an ihrer gegenüberliegenden Längsseite an einer ersten Stange (11), die an einem um eine etwa in der Mitte des Vorratsbehälters (5) befindliche Gelenkachse verschwenkbaren Schwenkbügel (14) befestigt und/oder Bestandteil des Schwenkbügels (14) ist, befestigt ist, wobei der Schwenkbügel (14) am Vorratsbehälter (5) mittels Gelenkanordnungen schwenkbar angelenkt ist, wobei die Abdeckplane (8) zur Freigabe der Einfüllöffnung (7) des Vorratsbehälters (5) wegschwenkbar ist, wobei an der Abdeckplane (8) zumindest eine zweite Stange (16) zwischen der Befestigung der Abdeckplane (8) am Vorratsbehälter (5) und der ersten Stange (11) und beabstandet zu dieser angeordnet ist, wobei die zweite Stange (16) parallel zu der ersten Stange (11) und der Behälterkante (17) verläuft, an der die Abdeckplane (8) befestigt ist, wobei die zweite Stange (16) in der den Behälter (5) verschließenden Position der Abdeckplane (8) höher gelegen ist, als die erste Stange (11) und die Behälterkante (17), an der die Abdeckplane (8) befestigt ist, wodurch die Abdeckplanenanordnung im geschlossenen Zustand ein Dach formt, **wobei** die zweite Stange (16) kürzer ist als die erste Stange (11) und als die Behälterkante (17), an welcher die Abdeckplane (8) befestigt ist, wobei die Abdeckplane (8) von der Behälterkante (17) und der ersten Stange (11), an der die Abdeckplane (8) befestigt ist, ausgehend zu der höher gelegenen zweiten Stange (16) schmaler werdend verläuft, wodurch trapezförmige Dachflächen (18,19) der Abdeckplane (8) ausgebildet sind, **dadurch gekennzeichnet, dass** die Giebelseiten der als Dach angeordneten Abdeckplane (8) von dreieckförmigen Stirnflächen (20) der Abdeckplane (8) verschlossen sind, so dass die dreieckförmigen Stirnflächen (20) des Dachs ausgehend von den stirnseitigen Behälterkanten (21) zu den Enden der kürzeren zweiten Stange (16) schräg angestellt sind, und dass das Dach asymmetrisch ausgebildet ist.

2. Dachförmige Abdeckplanenanordnung nach Anspruch 1, **dadurch gekennzeichnet, dass** die zweite Stange (16) an der Abdeckplane (8) näher an der Kante (17) des Vorratsbehälters (5) befestigt ist, an der die Abdeckplane (8) am Vorratsbehälter (5) befestigt ist, als an der ersten Stange (11).

3. Dachförmige Abdeckplanenanordnung nach zumindest einem der vorangegangenen Ansprüche **dadurch gekennzeichnet, dass** die Abdeckplane (8) in ihrer die Behälteröffnung (7) abdeckenden Position eine derartige Länge aufweist, dass sie in zumindest annähernd gestraffter Weise die Behälteröffnung (7) abdeckt.

## Claims

1. Roof-shaped tarpaulin arrangement with a storage tank (5) of an agricultural distribution machine (4), the upper tank opening of which storage tank, in particular filling opening (7), can be covered with a tarpaulin (8), wherein the tarpaulin (8) is fastened on its longitudinal side to the storage tank (5) by means of suitable fastening means and is fastened on its opposite longitudinal side to a first rod (11), which is fastened to a pivot bow (14) which is pivotable about an axis of articulation located approximately in the centre of the storage tank (5), and/or is part of the pivot bow (14), wherein the pivot bow (14) is coupled pivotably to the storage tank (5) by means of articulation arrangements, wherein the tarpaulin (8) can be pivoted away in order to open up the filling opening (7) of the storage tank (5), wherein at least one second rod (16) is arranged on the tarpaulin (8) between the fastening of the tarpaulin (8) to the storage tank (5) and the first rod (11) and at a distance from the latter, wherein the second rod (16) runs parallel to the first rod (11) and the tank edge (17), to which the tarpaulin (8) is fastened, wherein, in the position closing the tank (5), the second rod (16) is positioned higher than the first rod (11) and the tank edge (17), to which the tarpaulin (8) is fastened, as a result of which the tarpaulin arrangement forms a roof in the closed state, wherein the second rod (16) is shorter than the first rod (11) and than the tank edge (17), to which the tarpaulin (8) is fastened, wherein the tarpaulin (8) runs in a manner becoming narrower from the tank edge (17) and the first rod (11), to which the tarpaulin (8) is fastened, to the second rod (16), which is positioned higher, as a result of which trapezoidal roof surfaces (18, 19) of the tarpaulin (8) are formed, **characterized in that** the gable sides of the tarpaulin (8) arranged as the roof are closed by triangular end surfaces (20) of the tarpaulin (8) such that the triangular end surfaces (20) of the roof are positioned obliquely from the end-side tank edges (21) to the ends of the shorter second rod (16), and **in that** the roof is formed asymmetrically.

2. Roof-shaped tarpaulin arrangement according to Claim 1, **characterized in that** the second rod (16) is fastened to the tarpaulin (8) closer to the edge (17) of the storage tank (5), at which the tarpaulin (8) is fastened to the storage tank (5), than to the first rod (11) .

3. Roof-shaped tarpaulin arrangement according to at least either of the preceding claims, **characterized in that** the tarpaulin (8) in its position covering the tank opening (7) is of such a length that it covers the tank opening (7) in an at least approximately taut manner.

## Revendications

1. Système de bâche de couverture en forme de toit pour un récipient de stockage (5) d'une machine de distribution agricole (4), dont l'ouverture supérieure du récipient, en particulier l'ouverture de remplissage (7) peut être couverte par une bâche de couverture (8), dans lequel la bâche de couverture (8) est fixée sur son premier long côté au récipient de stockage (5) au moyen de moyens de fixation appropriés et sur son long côté opposé à une première barre (11), qui est fixée à un étrier pivotant (14) pouvant pivoter autour d'un axe de pivotement se trouvant environ au milieu du récipient de stockage (5) et/ou qui fait partie de l'étrier pivotant (14), dans lequel l'étrier pivotant (14) est articulé de façon pivotante sur le récipient de stockage (5) au moyen de systèmes d'articulations, dans lequel la bâche de couverture (8) peut être relevée pour libérer l'ouverture de remplissage (7) du récipient de stockage (5), dans lequel au moins une deuxième barre (16) est disposée sur la bâche de couverture (8) entre la fixation de la bâche de couverture (8) au récipient de stockage (5) et la première barre (11) et à distance de celle-ci, dans lequel la deuxième barre (16) s'étend parallèlement à la première barre (11) et au bord (17) du récipient, auquel la bâche de couverture (8) est fixée, dans lequel la deuxième barre (16) dans la position de la bâche de couverture (8) fermant le récipient (5) est placée plus haut que la première barre (11) et que le bord (17) du récipient auquel la bâche de couverture (8) est fixée, le système de bâche de couverture formant ainsi un toit dans l'état fermé, dans lequel la deuxième barre (16) est plus courte que la première barre (11) et que le bord (17) du récipient auquel la bâche de couverture (8) est fixée, la bâche de couverture (8) s'étend en devenant plus étroite depuis le bord (17) du récipient et la première barre (11) où la bâche de couverture (8) est fixée, jusqu'à la deuxième barre (16) placée plus haut, formant ainsi des versants de toit (18, 19) de forme trapézoïdale de la bâche de couverture (8),
**caractérisé en ce que** les pignons latéraux de la bâche de couverture (8) disposée en guise de toit sont fermés par des faces frontales triangulaires (20) de la bâche de couverture (8), de telle manière que les faces frontales triangulaires (20) du toit soient posées en oblique depuis les bords frontaux (21) du récipient jusqu'aux extrémités de la deuxième barre plus courte (16) et que le toit soit de forme asymétrique.

2. Système de bâche de couverture en forme de toit selon la revendication 1, **caractérisé en ce que** la deuxième barre (16) est fixée à la bâche de couverture (8) plus près du bord (17) du récipient de stockage (5) auquel la bâche de couverture (8) est fixée au récipient de stockage (5), que de la première barre (11) .

3. Système de bâche de couverture en forme de toit selon au moins une des revendications précédentes, **caractérisé en ce que** la bâche de couverture (8) présente dans sa position recouvrant l'ouverture (7) du récipient une longueur telle qu'elle recouvre d'une façon au moins sensiblement tendue l'ouverture (7) du récipient.
